# FASCICULE DE BREVET EUROPEEN

(11) **EP 3 059 826 B1**
(45) Date de publication et mention de la délivrance du brevet: **23.08.2017**
(21) Numéro de dépôt: 16156865.4
(22) Date de dépôt: 23.02.2016
(51) Int. Cl.: H02G 7/05

(54) **DISPOSITIF DE SUSPENSION POUR SUSPENDRE UN CÂBLE DE DIAMÈTRE PRÉDÉTERMINÉ À UN SUPPORT**
AUFHÄNGEVORRICHTUNG ZUM AUFHÄNGEN EINES KABELS MIT EINEM BESTIMMTEN DURCHMESSER AN EINER HALTERUNG
SUSPENSION DEVICE FOR SUSPENDING A CABLE OF A PREDETERMINED DIAMETER FROM A MOUNTING

(30) Priorité: 23.02.2015 FR 1551542
(43) Date de publication de la demande: 24.08.2016
(73) Titulaire: SAAE MALICO Connectors International, en abrégé "SM-CI", 27000 Evreux (FR)
(72) Inventeur: ALLAIRE, Xavier, 27930 GUICHAINVILLE (FR); HERPIN, Ludovic, 27220 GROSSOEUVRE (FR)
(74) Mandataire: Santarelli

(56) Documents cités:
- FR-A1- 2 211 780
- US-A- 1 798 777
- US-A- 1 973 502

## Description

L'invention a trait aux dispositifs qui servent à suspendre un câble de diamètre prédéterminé à un support.

On connait déjà, notamment par la demande de brevet français 2.211.780, un tel dispositif de suspension comportant :
- un corps comportant une gouttière s'étendant entre une première extrémité et une seconde extrémité, configurée pour recevoir le câble, lequel est susceptible d'être entraîné vis-à-vis de la gouttière vers la première extrémité ou vers la seconde extrémité ; et comportant une première glissière et une seconde glissière comportant chacune une surface oblique en regard d'une surface de fond de la gouttière, la surface oblique de la première glissière étant inclinée vers la surface de fond de la gouttière et vers la seconde extrémité, la surface oblique de la seconde glissière étant inclinée vers la surface de fond de la gouttière et vers la première extrémité ;
- un premier taquet comportant une surface d'appui pour appuyer sur le câble placé entre la surface d'appui et la surface de fond de la gouttière et comportant, sur un côté opposé à la surface d'appui, une surface de glissement pour glisser sur la surface oblique de la première glissière ;
- un second taquet comportant une surface d'appui pour appuyer sur le câble placé entre cette surface d'appui et la surface de fond de la gouttière et comportant, sur un côté opposé à sa surface d'appui, une surface de glissement pour glisser sur la surface oblique de la seconde glissière ;
- des organes de non-retour entre le corps et le premier taquet, pour permettre au premier taquet de se déplacer vers la seconde extrémité et pour interdire au premier taquet de se déplacer vers la première extrémité ; et des organes de non-retour entre le corps et le second taquet, pour permettre au second taquet de se déplacer vers la première extrémité et pour interdire au second taquet de se déplacer vers la seconde extrémité.

Quand le premier taquet se déplace vers la seconde extrémité du corps avec sa surface de glissement qui glisse sur la surface oblique de la première glissière, vu l'inclinaison de cette surface oblique, la surface d'appui du premier taquet se rapproche de la surface de fond de la gouttière.

Par conséquent, un câble situé entre la surface d'appui du premier taquet et la surface de fond de la gouttière est alors serré davantage.

Si le câble au contact de la surface d'appui du premier taquet se déplace vers la seconde extrémité du corps et entraîne avec lui le premier taquet, le câble est de plus en plus serré entre la surface d'appui du premier taquet et la surface de fond de la gouttière, jusqu'à ce que le câble finisse par ne plus pouvoir se déplacer vis-à-vis du corps.

La coopération entre le second taquet et la seconde glissière est semblable à la coopération entre le premier taquet et la première glissière, si ce n'est que le déplacement est vers la première extrémité : quand le second taquet se déplace vers la première extrémité du corps avec sa surface de glissement qui glisse sur la surface oblique de la seconde glissière, vu l'inclinaison de cette surface oblique, la surface d'appui du second taquet se rapproche de la surface de fond de la gouttière.

Si le câble au contact de la surface d'appui du second taquet se déplace vers la première extrémité du corps et entraîne avec lui le second taquet, le câble est de plus en plus serré entre la surface d'appui du second taquet et la surface de fond de la gouttière, jusqu'à ce que le câble finisse par ne plus pouvoir se déplacer vis-à-vis du corps.

Ainsi, grâce au premier taquet et au second taquet, le câble finit par être immobilisé vis-à-vis du corps, quel que soit le sens des efforts auxquels il est soumis.

L'invention vise à fournir un dispositif de suspension semblable mais plus simple et plus commode à utiliser.

L'invention propose à cet effet un dispositif de suspension pour suspendre un câble de diamètre prédéterminé à un support, comportant :
- un corps comportant une gouttière s'étendant entre une première extrémité et une seconde extrémité, configurée pour recevoir le câble, lequel est susceptible d'être entraîné vis-à-vis de la gouttière vers la première extrémité ou vers la seconde extrémité ; et comportant une première glissière et une seconde glissière comportant chacune une surface oblique en regard d'une surface de fond de la gouttière, la surface oblique de la première glissière étant inclinée vers la surface de fond de la gouttière et vers la seconde extrémité, la surface oblique de la seconde glissière étant inclinée vers la surface de fond de la gouttière et vers la première extrémité ;
- un premier taquet comportant une surface d'appui pour appuyer sur le câble placé entre la surface d'appui et la surface de fond de la gouttière et comportant, sur un côté opposé à la surface d'appui, une surface de glissement pour glisser sur la surface oblique de la première glissière ;
- un second taquet comportant une surface d'appui pour appuyer sur le câble placé entre cette surface d'appui et la surface de fond de la gouttière et comportant, sur un côté opposé à sa surface d'appui, une surface de glissement pour glisser sur la surface oblique de la seconde glissière ;
- des organes de non-retour entre le corps et le premier taquet, pour permettre au premier taquet de se déplacer vers la seconde extrémité et pour interdire au premier taquet de se déplacer vers la première extrémité ; et
- des organes de non-retour entre le corps et le second taquet, pour permettre au second taquet de se déplacer vers la première extrémité et pour interdire au second taquet de se déplacer vers la seconde extrémité ;
dispositif caractérisé en ce qu'il comporte en outre une anse dont une première extrémité est reliée au premier taquet et dont une seconde extrémité est reliée au second taquet, laquelle anse est flexible pour permettre à sa première extrémité et à sa seconde extrémité de s'éloigner ou de se rapprocher l'une de l'autre.

Ainsi, dans le dispositif de suspension selon l'invention, c'est une même pièce qui comporte à la fois le premier taquet et le second taquet ainsi qu'une anse reliée à chacun d'eux.

L'anse joue ainsi un rôle de rattachement du premier taquet et du second taquet lorsque le dispositif de suspension n'est pas assemblé.

Lorsque le dispositif de suspension est assemblé, l'anse peut jouer le rôle d'un organe de liaison entre un support auquel le câble doit être suspendu et l'organe d'immobilisation formé par le corps, le premier taquet et le second taquet.

Le dispositif selon l'invention est donc particulièrement simple puisqu'il est formé d'un nombre de pièces réduits (le corps, d'une part, et, d'autre part, la pièce comportant l'anse, le premier taquet et le second taquet) tandis qu'il est particulièrement commode d'utilisation puisque les risques de perte d'un taquet sont éliminés ou en tout cas fortement réduits.

En outre, l'anse est mise en place vis-à-vis du corps dès lors que le premier taquet et le second taquet ont été mis en place dans le corps.

Selon des caractéristiques avantageuses :
- lesdits organes de non-retour entre le corps et le premier taquet comportent une denture sur une surface du corps et un cran sur la première extrémité de l'anse ; et lesdits organes de non-retour entre le corps et le second taquet comportent une denture sur une surface du corps et un cran sur la seconde extrémité de l'anse ;
- l'anse comporte un premier bras qui comporte ladite première extrémité et un second bras qui comporte ladite seconde extrémité ; le cran sur la première extrémité de l'anse comporte une face inclinée située du côté du second bras et une face droite située du côté opposé à celui où se trouve le second bras, et la denture de la surface présente des faces inclinées tournées vers la première extrémité et des faces droites tournées vers la seconde extrémité ; et le corps et le premier taquet sont configurés pour que quand la surface de glissement du premier taquet glisse sur la surface oblique de la première glissière, le glissement des faces inclinées du cran sur les faces inclinées de la denture de la surface permette au premier taquet de se déplacer vers la seconde extrémité, alors que les faces droites du cran et de la denture interdisent au premier taquet de se déplacer vers la première extrémité ; le cran sur la seconde extrémité de l'anse comporte une face inclinée située du côté du premier bras et une face droite située du côté opposé à celui où se trouve le premier bras, et la denture de la surface présente des faces inclinées tournées vers la seconde extrémité et des faces droites tournées vers la première extrémité ; et le corps et le second taquet sont configurés pour que quand la surface de glissement du second taquet glisse sur la surface oblique de la seconde glissière, le glissement des faces inclinées du cran sur les faces inclinées de la denture de la surface permette au second taquet de se déplacer vers la première extrémité, alors que les faces droites du cran et de la denture interdisent au second taquet de se déplacer vers la seconde extrémité ;

- le premier taquet et le second taquet comportent chacun une semelle dont fait partie ladite surface d'appui et une platine dont fait partie ladite surface de glissement, la semelle et la platine étant disposées en V avec, sur la semelle, la surface qui regarde la platine qui est sur un côté opposé à la surface d'appui et avec, sur la platine, la surface qui regarde la semelle qui est sur un côté opposé aux surfaces de glissement ;
- la platine du premier taquet et du second taquet présente une portion qui s'étend au-delà de la semelle ; et la platine est reliée, à son extrémité opposée à celle par laquelle elle est reliée à la semelle, à une patte formée par une paroi s'étendant transversalement à la platine, du côté de la semelle ;
- la première glissière comporte deux dites surfaces obliques, respectivement une première surface oblique et une seconde surface oblique, le premier taquet comporte deux dites surfaces de glissement, respectivement une première surface de glissement pour glisser sur la première surface oblique de la première glissière et une seconde surface de glissement pour glisser sur la seconde surface oblique de la première glissière, le corps comporte un espace entre la première surface oblique et la seconde surface oblique de la première glissière pour que la première extrémité de l'anse puisse se déplacer avec le premier taquet ; et la seconde glissière comporte deux dites surfaces obliques, respectivement une première surface oblique et une seconde surface oblique, le second taquet comporte deux dites surfaces de glissement, respectivement une première surface de glissement pour glisser sur la première surface oblique de la seconde glissière et une seconde surface de glissement pour glisser sur la seconde surface oblique de la seconde glissière, le corps comporte un espace entre la première surface oblique et la seconde surface oblique de la seconde glissière pour que la seconde extrémité de l'anse puisse se déplacer avec le second taquet ;

- la première surface oblique et la seconde surface oblique de la première glissière sont chacune inclinées vers la surface de fond de la gouttière et vers l'espace situé entre elles ; et la première surface oblique et la seconde surface oblique de la seconde glissière sont chacune inclinées vers la surface de fond de la gouttière et vers l'espace situé entre elles ;
- l'espace du corps situé entre la première surface oblique et la seconde surface oblique de la première glissière, et l'espace du corps situé entre la première surface oblique et la seconde surface oblique de la seconde glissière font partie d'un même espace du corps s'étendant de la première extrémité à la seconde extrémité de la gouttière ;
- la surface de fond de la gouttière présente des godrons ;
- la surface d'appui du premier taquet et la surface d'appui du second taquet présentent des encoches ;
- l'anse comporte un premier bras qui comporte ladite première extrémité et un second bras qui comporte ladite seconde extrémité ; et le dispositif comporte deux fentes ménagées respectivement dans le premier bras et dans le second bras, chacune configurée pour le passage d'un feuillard ; et/ou
- ledit corps comporte une oreille saillant d'un rebord du côté qui est opposé à la gouttière, ladite oreille étant munie d'un orifice central pour le passage de la tige d'une vis.

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en perspective d'un dispositif selon l'invention, monté sur un support, en configuration d'utilisation ;
- les figures 2 et 3 sont des vues en élévation semblables, montrant des modes alternatifs de fixation du dispositif de suspension selon l'invention, faisant intervenir respectivement un feuillard et une vis ;
- la figure 4 est une vue en perspective du corps du dispositif de suspension selon l'invention ;
- les figures 5 et 6 sont des vues en coupe de ce corps, prises respectivement comme indiqué en V-V sur la figure 6 et en VI-VI sur la figure 5 ;
- la figure 7 est une vue en perspective de la pièce du dispositif de suspension selon l'invention qui comporte à la fois l'anse, le premier taquet et le second taquet ;
- la figure 8 est une vue en élévation de l'un des taquets et de l'extrémité de l'anse reliée à ce taquet ;
- la figure 9 est la vue en coupe repérée par IX-IX sur la figure 8 ; et
- la figure 10 est une vue en perspective du dispositif de suspension tel qu'il est fourni à l'utilisateur, sous la forme d'un ensemble moulé d'une seule pièce comportant le corps du dispositif de suspension selon l'invention, la pièce comportant à la fois l'anse et les deux taquets ainsi qu'un cordon reliant cette pièce et le corps.

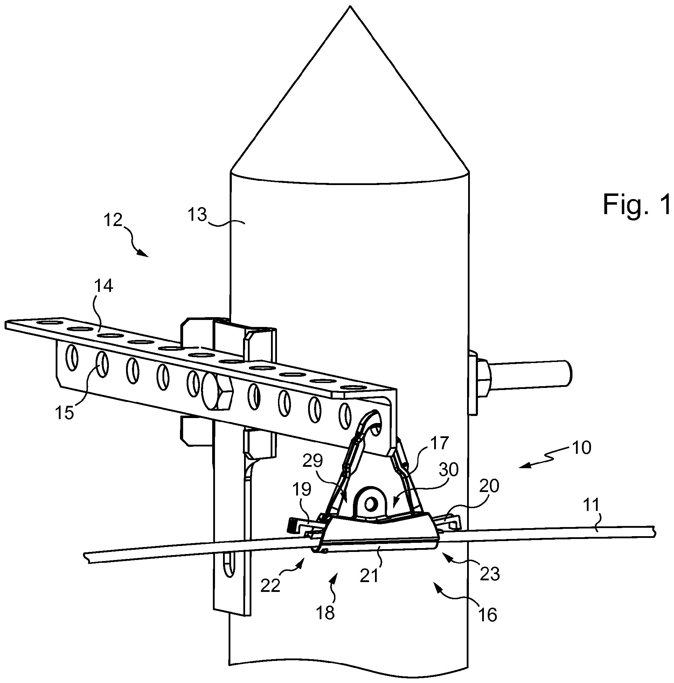

Le dispositif de suspension 10 illustré sur les figures 1 à 10 est prévu pour suspendre un câble 11 à un support 12, ici un poteau téléphonique 13 sur lequel est fixée une traverse 14 dans laquelle sont ménagés des trous 15 (figure 1).

Le dispositif de suspension 10 comporte un organe d'immobilisation 16 pour immobiliser le câble et un organe de liaison pour relier l'organe d'immobilisation 16 au support 12.

Le câble 11 est susceptible d'être entraîné vis-à-vis de l'organe d'immobilisation 16 aussi bien dans un sens que de l'autre, c'est-à-dire aussi bien vers le côté que l'on voit à gauche sur la figure 1 que vers le côté que l'on voit à droite.

L'organe d'immobilisation 16 comporte un corps 18, un premier taquet 19 et un second taquet 20.

L'organe de liaison est ici une anse 17 dont une première extrémité est reliée au premier taquet 19 et une seconde extrémité est reliée au second taquet 20.

L'anse est flexible pour permettre à sa première extrémité et à sa seconde extrémité de s'éloigner ou de se rapprocher l'une de l'autre, et donc pour permettre au premier taquet 19 et au second taquet 20 de se rapprocher ou de s'éloigner l'un de l'autre.

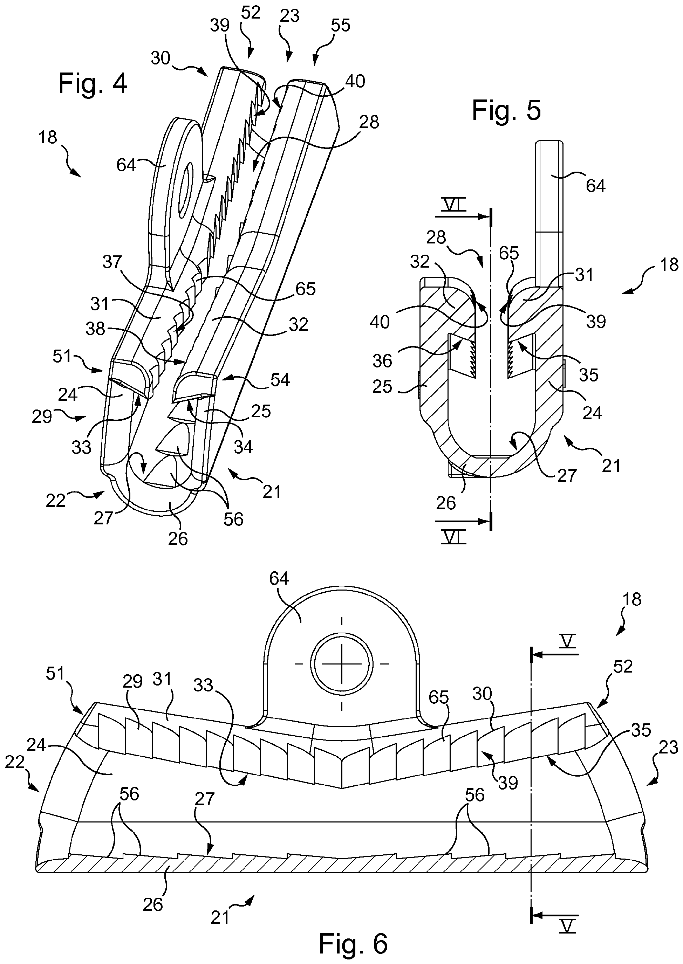

On va maintenant décrire en détails le corps 18 à l'appui des figures 4 à 6.

Le corps 18 comporte une gouttière 21, une première glissière 29 et une seconde glissière 30.

Le corps 18 s'étend entre une première extrémité 22, que l'on voit à gauche sur la figure 1, et une seconde extrémité 23, que l'on voit à droite sur la figure 1.

La gouttière 21 est configurée pour recevoir le câble 11, lequel est susceptible d'être entrainé vis-à-vis de la gouttière 21 vers la première extrémité 22 ou vers la seconde extrémité 23.

La gouttière 21 comporte une paroi de fond 26, une première paroi latérale 24 et une seconde paroi latérale 25.

La première paroi latérale 24 et la seconde paroi latérale 25 sont en regard l'une de l'autre.

La paroi de fond 26 est incurvée. Elle s'étend de l'une à l'autre des parois latérales 24 et 25.

La surface interne de la paroi de fond 26 forme une surface de fond 27 de la gouttière 21.

Un premier rebord 31 longe la première paroi latérale 24 du côté opposé à la paroi de fond 26. Le premier rebord 31 s'étend entre une première extrémité 51 située au niveau de la première extrémité 22 de la gouttière 21 et une seconde extrémité 52 située au niveau de la seconde extrémité 23 de la gouttière 21.

Un second rebord 32 longe la seconde paroi latérale 25 du côté opposé à la paroi de fond 26. Le second rebord 32 s'étend entre une première extrémité 54 située au niveau de la première extrémité 22 de la gouttière 21 et une seconde extrémité 55 située au niveau de la seconde extrémité 23 de la gouttière 21.

Le premier rebord 31 et le second rebord 32 sont en regard et à distance l'un de l'autre. L'espace 28 qui sépare le premier rebord 31 et le second rebord 32 permet à la première extrémité de l'anse 17 de se déplacer avec le premier taquet 19 et à la seconde extrémité de l'anse 17 de se déplacer avec le second taquet 20.

La première glissière 29 est en deux parties, formées respectivement par la partie du premier rebord 31 située entre sa première extrémité 51 et le milieu du corps 18 et par la partie du second rebord 32 située entre sa première extrémité 54 et le milieu du corps 18.

La seconde glissière 30 est en deux parties, formées respectivement par la partie du premier rebord 31 située entre sa seconde extrémité 52 et le milieu du corps 18 et par la partie du second rebord 32 située entre sa seconde extrémité 55 et le milieu du corps 18.

Vers l'intérieur du corps 18, le premier rebord 31 comporte une portion en saillie de la paroi latérale 24 et, de même, vers l'intérieur du corps le second rebord 32 comporte une portion en saillie de la seconde paroi latérale 25.

Les surfaces de ces portions en saillie qui sont en regard de la surface de fond 27 forment des surfaces obliques prévues pour coopérer avec des surfaces de glissement correspondantes du premier taquet 19 et du second taquet 20.

En l'occurrence, la première glissière 29 comporte une première surface oblique 33 faisant partie du premier rebord 31 et une seconde surface oblique 34 faisant partie du second rebord 32.

Chacune des surfaces obliques 33 et 34 est inclinée vers la surface de fond 27 et vers la seconde extrémité 23.

La seconde glissière 30 comporte une première surface oblique 35 faisant partie du premier rebord 31 et une seconde surface oblique 36 faisant partie du second rebord 32.

Chacune des surfaces obliques 35 et 36 est inclinée vers la surface de fond 27 et vers la première extrémité 22.

En outre de cette inclinaison suivant la direction longitudinale, les surfaces obliques 33 à 36 sont également inclinées suivant la direction transversale.

En l'occurrence, la première surface oblique 33 et la seconde surface oblique 34 de la première glissière 29 sont inclinées l'une vers l'autre ainsi que vers la surface de fond 27 ; et de même la première surface oblique 35 et la seconde surface oblique 36 de la seconde glissière 30 sont chacune inclinée l'une vers l'autre et vers la surface de fond 27.

Les surfaces de la première glissière 29 situées de part et d'autre de l'espace 28, soit la surface 37 du premier rebord 31 et la surface 38 du second rebord 32, présentent chacune une denture 65 faisant partie d'organes de non-retour prévus pour permettre au premier taquet 19 de se déplacer vers la seconde extrémité 23 et pour interdire au premier taquet 19 de se déplacer vers la première extrémité 22.

Les surfaces de la seconde glissière 30 situées de part et d'autre de l'espace 28, soit la surface 39 du premier rebord 31 et la surface 40 du second rebord 32, présentent chacune une denture 65 faisant partie d'organes de non-retour prévus pour permettre au second taquet 20 de se déplacer vers la première extrémité 22 et pour interdire au second taquet 20 de se déplacer vers la seconde extrémité 23.

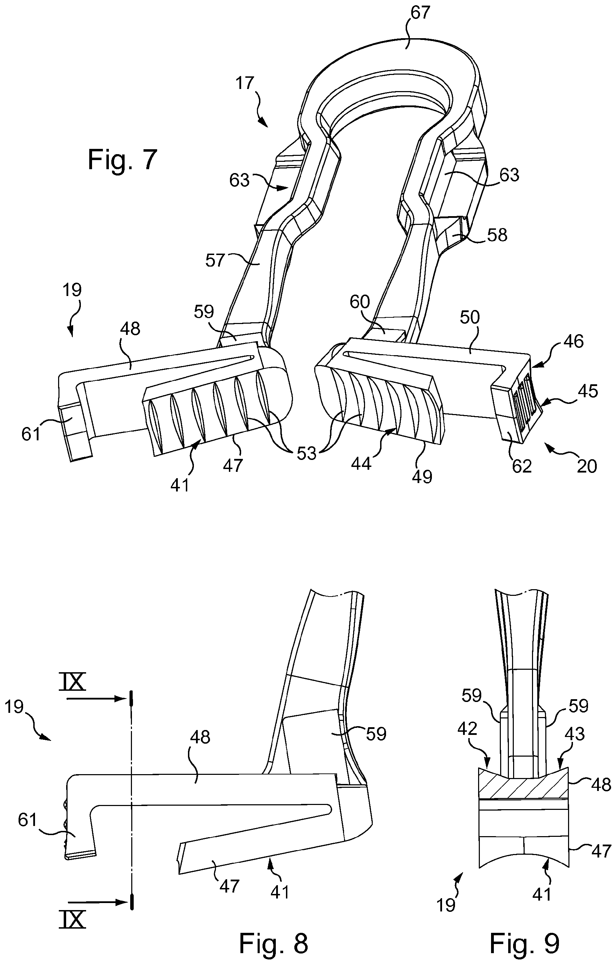

On va maintenant décrire en détails à l'appui des figures 7 à 9 la pièce qui comporte à la fois l'anse 17, le premier taquet 19 et le second taquet 20.

Le premier taquet 19 comporte une surface d'appui 41 et, sur un côté opposé à la surface d'appui 41, une première surface de glissement 42 et une seconde surface de glissement 43.

La surface d'appui 41 permet au premier taquet 19 d'appuyer sur le câble 11 placé entre la surface d'appui 41 et la surface de fond 27.

La première surface de glissement 42 et la seconde surface de glissement 43 permettent au premier taquet 19 de glisser respectivement sur la première surface oblique 33 et la seconde surface oblique 34 de la première glissière 29.

Ainsi, quand le premier taquet 19 se déplace vers la seconde extrémité 23 de la gouttière 21 avec ses surfaces de glissement 42 et 43 qui glissent respectivement sur les surfaces obliques 33 et 34, vu l'inclinaison de ces surfaces obliques 33 et 34, la surface d'appui 41 se rapproche de la surface de fond 27 de la gouttière 21.

Par conséquent, le câble 11 situé entre la surface de fond 27 et la surface d'appui 41 est alors serré davantage.

Ici, la surface d'appui 41 fait partie d'une semelle 47 et les surfaces de glissement 42 et 43 font partie d'une platine 48.

La semelle 47 et la platine 48 sont disposées en V.

Sur la semelle 47, la surface qui regarde la platine 48 est sur un côté opposé à la surface d'appui 41.

Sur la platine 48, la surface qui regarde la semelle 47 est sur un côté opposé aux surfaces de glissement 42 et 43.

La surface d'appui 41 est concave afin de bien épouser la forme du câble 11. Des encoches 53 sont ménagées à partir de la surface d'appui 41 pour faire obstacle au glissement du câble 11.

Les surfaces de glissement 42 et 43 sont inclinées suivant la direction transversale de la même façon que les surfaces obliques 33 et 34 de la première glissière 29, c'est-à-dire que les surfaces de glissement 33 et 34 sont inclinées l'une vers l'autre ainsi que vers l'opposé du côté qu'elles regardent.

Le second taquet 20 et le premier taquet 19 ont une même configuration et sont disposés en image miroir l'un de l'autre.

La description qui vient d'être donnée du premier taquet 19 vaut également pour le second taquet 20 à condition de remplacer les références numériques 19, 29, 33, 34, 41, 42 et 43 respectivement par 20, 30, 35, 36, 44, 45 et 46.

Etant donné que la seconde glissière 30 et la première glissière 29 ont une même configuration et sont disposées en image miroir l'une de l'autre, la coopération entre le second taquet 20 et la seconde glissière 30 est semblable à la coopération entre le premier taquet 19 et la première glissière 29.

Ainsi, le second taquet 20 serre davantage le câble 11 lorsqu'il se déplace vers la première extrémité 22 de la gouttière 21.

La paroi de fond 27 comporte deux séries de godrons 56 ayant chacun une face droite et une face inclinée.

Une première série de godrons 56 est en regard de la première glissière 29. Chaque godron 56 de cette première série a sa face droite tournée vers la première extrémité 22. Ainsi, les godrons 56 de cette première série gênent le glissement du câble 11 vers la seconde extrémité 23.

On observera que le premier taquet 19 est prévu pour serrer davantage le câble 11 lorsqu'il se déplace aussi vers la seconde extrémité 23, de sorte que l'action des godrons 56 de la première série est complémentaire à l'action du premier taquet 19 sur le câble 11.

Une seconde série de godrons 56 est en regard de la seconde glissière 30. Chaque godron 56 de cette seconde série a sa face droite tournée vers la seconde extrémité 23. Ainsi, les godrons 56 de cette seconde série gênent le glissement du câble 11 vers la première extrémité 22.

On observera que le second taquet 20 est prévu pour serrer davantage le câble 11 lorsqu'il se déplace aussi vers la première extrémité 22, de sorte que l'action des godrons 56 de la seconde série est complémentaire à l'action du second taquet 20 sur le câble 11.

Le premier taquet 19 et le second taquet 20 ont chacun une platine 48 ou 50 qui est plus longue que la semelle 47 ou 49.

Ainsi, la platine 48 ou 50 s'étend au-delà de la semelle 47 ou 49.

La platine 48 ou 50 est reliée, à son extrémité opposée à celle par laquelle elle est reliée à la semelle 47 ou 50, à une patte 61 ou 62 formée par une paroi s'étendant transversalement à la platine 48 ou 50, du côté de la semelle 47 ou 49.

Ainsi qu'on le comprend au vu des figures 1, 2 ou 3, la longueur plus importante de la platine 48 ou 50 et la patte 61 ou 62 permettent aisément à un utilisateur de pousser avec un doigt qui vient contre la patte 61 ou 62, sur le premier taquet 19 ou le second taquet 20 pour rapprocher celui-ci du milieu du corps 18, c'est-à-dire pour déplacer le premier taquet 19 vers la seconde extrémité 23 ou pour déplacer le second taquet 20 vers la première extrémité 22.

On va maintenant décrire plus en détails l'anse 17.

L'anse 17 comporte un premier bras 57 dont fait partie la première extrémité reliée au premier taquet 19, un second bras 58 dont fait partie la seconde extrémité reliée au second taquet 20 et un coude 67 reliant les bras 57 et 58 du côté opposé aux taquets 19 et 20.

La liaison entre le premier bras 57 et le premier taquet 19 s'effectue ici à l'extrémité où se rejoignent la platine 48 et la semelle 47 ; et de façon centrée suivant la direction transversale, le premier bras 57 saillant d'une zone de la platine 48 située entre la première surface de glissement 42 et la seconde surface de glissement 43.

De même, la liaison entre le second bras 58 et le second taquet 20 s'effectue ici à l'extrémité où se rejoignent la platine 50 et la semelle 49 ; et de façon centrée suivant la direction transversale, le second bras 58 saillant d'une zone de la platine 50 située entre la première surface de glissement 45 et la seconde surface de glissement 46.

La partie de l'extrémité du premier bras 57 qui saille de la platine 48 comporte sur chaque face latérale un cran 59. La partie de l'extrémité du second bras 58 qui saille de la platine 50 comporte sur chaque face latérale un cran 60.

Chacun des crans 59 et 60 comporte une face droite et une face inclinée.

Pour les crans 59 du premier bras 57, les faces inclinées sont du côté du second bras 58 et les faces droites sont du côté opposé à celui où se trouve le second bras 58.

Pour les crans 60 du second bras 58, les faces inclinées sont du côté du premier bras 57 et les faces droites sont du côté qui est opposé au premier bras 57.

Les crans 59 du premier bras 57 sont configurés pour coopérer avec la denture 65 présente sur les surfaces de la première glissière 29 situées de part et d'autre de l'espace 28, c'est-à-dire sur la surface 37 du premier rebord 31 et sur la surface 38 du second rebord 32.

La denture 65 de chacune de ces surfaces 37 et 38 présente des faces inclinées tournées vers la première extrémité 22 et des faces droites tournées vers la seconde extrémité 23.

Le corps 18 et le premier taquet 19 sont configurés pour que quand les surfaces de glissement 42 et 43 du premier taquet 19 glissent sur les surfaces obliques 33 et 34, le glissement des faces inclinées des crans 59 sur les faces inclinées de la denture 65 des surfaces 37 et 38 permet au premier taquet 19 de se déplacer vers la seconde extrémité 23 ; alors que les faces droites des crans 59 et des dentures 65 interdisent au premier taquet 19 de se déplacer vers la première extrémité 22.

Ainsi, les crans 59 et les dentures 65 des surfaces 37 et 38 sont des organes de non-retour.

Les crans 60 du second bras 58 sont configurés pour coopérer avec la denture 65 présente sur les surfaces de la seconde glissière 30 situées de part et d'autre de l'espace 28, c'est-à-dire sur la surface 39 du premier rebord 31 et sur la surface 40 du second rebord 32.

La denture 65 de chacune de ces surfaces 39 et 40 présente des faces inclinées tournées vers la seconde extrémité 23 et des faces droites tournées vers la première extrémité 22.

Le corps 18 et le second taquet 20 sont configurés pour que quand les surfaces de glissement 45 et 46 du second taquet 20 glissent sur les surfaces obliques 35 et 36, le glissement des faces inclinées des crans 60 sur les faces inclinées de la denture 65 des surfaces 39 et 40 permet au second taquet 20 de se déplacer vers la première extrémité 22 ; alors que les faces droites des crans 60 et des dentures 65 interdisent au second taquet 20 de se déplacer vers la seconde extrémité 23.

Ainsi, les crans 60 et les dentures 65 des surfaces 39 et 40 sont des organes de non-retour.

On observera qu'il est avantageux que les organes de guidage (surfaces obliques 33 à 36 et surfaces de glissement 42, 43, 45 et 46) soient distincts des organes de non-retour. En particulier, le guidage entre le corps 18 et les taquets 19 et 20 s'effectue sans à-coup.

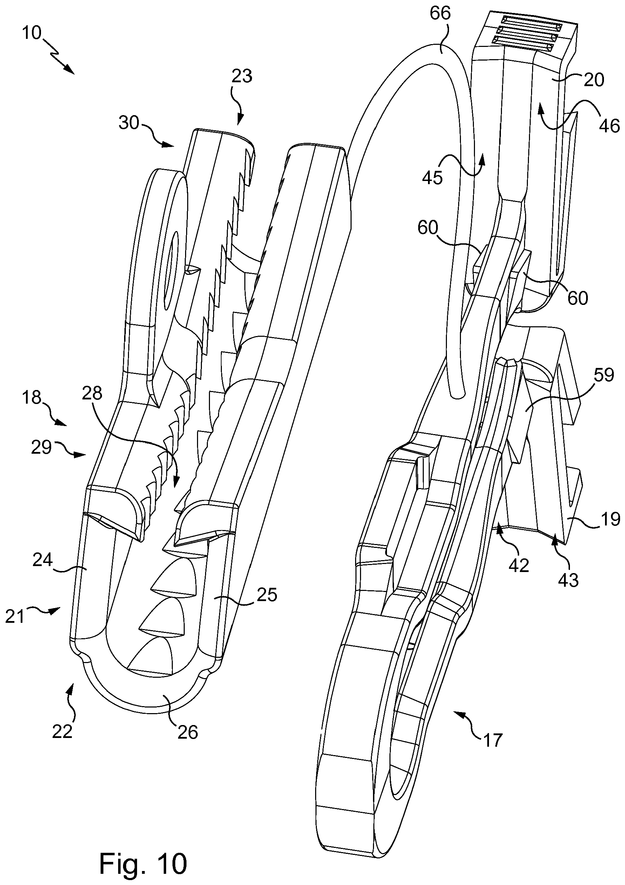

Ainsi que montré sur la figure 10, le dispositif de suspension 10 est livré avec l'anse 17 et l'organe d'immobilisation 16 qui ne sont pas assemblés l'un à l'autre.

Par commodité, l'organe de liaison et l'organe d'immobilisation 16 sont reliés par un cordon 66.

Le corps 18 et la pièce comportant à la fois l'anse 17, le premier taquet 19 et le second taquet 20 sont chacune dans une matière plastique rigide mais présentant une certaine flexibilité.

Grâce à cette flexibilité, l'anse 17 peut être déformée pour permettre au premier taquet 19 et au second taquet 20 de s'écarter ou de se rapprocher l'un de l'autre.

De même, en ce qui concerne le corps 18, le premier rebord 31 et le second rebord 32 peuvent être écartés l'un de l'autre.

Pour suspendre le câble 11 au support 12, on met en place le câble 11 dans la gouttière 21 par insertion au travers de l'espace 28 situé entre le premier rebord 31 et le second rebord 32.

Si besoin, au cours de cette insertion les rebords 31 et 32 s'écartent l'un de l'autre grâce à la flexibilité de la matière plastique dans laquelle est faite le corps 18.

Par ailleurs, on met en place sur le support 12 la pièce comportant l'anse 17, le premier taquet 19 et le second taquet 20, en faisant passer le premier taquet 19 ou le second taquet 20 dans un trou 15.

Ensuite, on engage par exemple le premier taquet 19 dans le corps 18 du côté des premières extrémités 51 et 54 respectivement du premier rebord 31 et du second rebord 32 en présentant en premier l'extrémité du premier taquet 19 par laquelle sont reliées la semelle 47 et la platine 48.

Lorsque le premier taquet 19 s'enfonce dans le corps 18, par exemple parce qu'on le pousse avec un doigt en appuyant sur la patte 61, ainsi qu'expliqué ci-dessus les surfaces de glissement 42 et 43 glissent respectivement sur les surfaces obliques 33 et 34 de sorte que la surface d'appui 41 se rapproche de la surface de fond 27 de la gouttière 21 et que le câble 11 est de plus en plus serré au fur et à mesure que le premier taquet 19 s'enfonce dans le corps 18.

Le fait que la semelle 47 et la platine 48 du premier taquet 19 sont disposées en V permet d'utiliser la flexibilité de la matière pour que la semelle 47 se rapproche de la platine 48 lorsque le taquet 19 s'enfonce dans le corps 18 et serre le câble 11 ; la zone de jonction entre la semelle 47 et la platine 48 formant une charnière élastique.

La surface d'appui 41 reste ainsi parallèle au câble 11 pendant qu'elle avance avec celui-ci.

On met en place de façon semblable le second taquet 20 de l'autre côté du corps 18.

Bien entendu, il est possible de mettre en place d'abord le second taquet 20 et ensuite le premier taquet 19.

La capacité de flexion de l'anse 17 permet au premier taquet 19 et au second taquet 20 de s'écarter et de se rapprocher l'un de l'autre pour permettre cette mise en place.

En outre, du fait que les surfaces de glissement 42 et 43 du premier taquet 19 sont inclinées suivant la direction transversale de la même façon que les surfaces obliques 33 et 34 de la première glissière 29, et du fait que les surfaces de glissement 45 et 46 du second taquet 20 sont inclinées suivant la direction transversale de la même façon que les surfaces obliques 35 et 36 de la seconde glissière 30, évite que les rebords 31 et 32 ne s'écartent sous l'effet des contraintes.

Le câble 11 du type pour lequel est prévu le dispositif de suspension 10 a une gaine en matière plastique relativement souple, dans laquelle pénètrent donc les godrons 56 ; tandis que cette matière plastique peut pénétrer dans les encoches 53 ménagées dans la surface d'appui 41 du premier taquet 19 ou dans la surface d'appui 44 du second taquet 20.

En principe, les efforts exercés par le câble 11 sur le dispositif de suspension 10 sont équilibrés des deux côtés.

Au cas où un déséquilibre se produit, si le câble a tendance à se déplacer vers le côté que l'on voit à droite sur la figure 1, 2 ou 3, ce déplacement a tendance à entraîner le premier taquet 19 vers la seconde extrémité 23, de sorte que le câble 11 est davantage serré par le dispositif de suspension 10 et va finir par être immobilisé vis-à-vis de celui-ci.

De même, si le câble 11 a tendance à se déplacer vis-à-vis du dispositif de suspension 10 dans l'autre sens (vers la gauche de la figure 1, ou 2 ou 3), le second taquet 20 va se déplacer vers la première extrémité 22 jusqu'à ce que le câble 11 soit immobilisé.

On observera que le fait de rassembler en une seule pièce l'anse 17, qui joue le rôle d'organe de liaison, le premier taquet 19 et le second taquet 20, qui font partie de l'organe d'immobilisation, rend la mise en oeuvre du dispositif de suspension 10 particulièrement simple et commode.

En particulier, les risques de perte d'un taquet sont éliminés ou en tout cas fortement réduits.

En outre, l'organe de liaison est mis en place vis-à-vis du corps 18 dès lors que le premier taquet 19 et le second taquet 20 ont été mis en place, aucune autre manoeuvre n'étant nécessaire.

Lorsque le support auquel doit être suspendu le câble 11 ne comporte pas de trou, tel que les trous 15 de la traverse 14, le dispositif de suspension 10 est également utilisable en étant fixé à l'aide d'un cerclage du poteau 13 grâce à un feuillard 8 qui passe au travers de deux fentes 63 ménagées respectivement dans le premier bras 57 et dans le second bras 58 de l'anse 17.

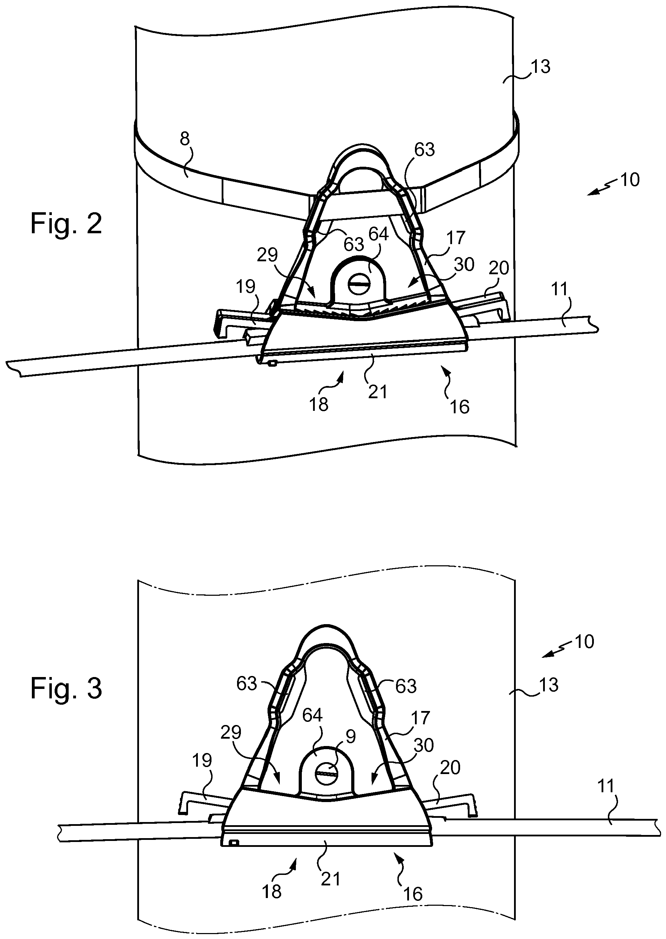

Il est encore possible, ainsi que montré sur la figure 3, de fixer le dispositif de suspension 10 sur le poteau 13 grâce à une vis 9 passant dans l'orifice central d'une oreille 64 que comporte le corps 18 en saillie de l'un des rebords (ici le premier rebord 31) du côté qui est opposé à la gouttière 21.

Dans des variantes non illustrées :
- l'agencement du corps tel que 18 est différent, avec par exemple une glissière en une seule partie plutôt qu'en deux parties et comportant une surface de glissement concave, la liaison entre chaque taquet et l'extrémité correspondante de l'anse telle que 17 se faisant latéralement au taquet (et non dans son plan médian comme dans l'exemple illustré) ;
- les organes de non-retour sont différents, par exemple les crans 59 et 60 sont remplacés par des tétons ; et/ou
- le premier taquet et le second taquet sont agencés différemment, par exemple en étant pleins entre la ou les surfaces de glissement et la surface d'appui.

De nombreuses variantes sont possibles en fonction des circonstances, et l'on rappelle à cet égard que l'invention ne se limite pas aux exemples décrits et représentés.

## Revendications

1. Dispositif de suspension pour suspendre un câble (11) de diamètre prédéterminé à un support (12), comportant :
- un corps (18) comportant une gouttière (21) s'étendant entre une première extrémité (22) et une seconde extrémité (23), configurée pour recevoir le câble (11), lequel est susceptible d'être entraîné vis-à-vis de la gouttière (21) vers la première extrémité (22) ou vers la seconde extrémité (23) ; et comportant une première glissière (29) et une seconde glissière (30) comportant chacune une surface oblique (33 - 36) en regard d'une surface de fond (27) de la gouttière (21), la surface oblique (33, 34) de la première glissière (29) étant inclinée vers la surface de fond (27) de la gouttière (21) et vers la seconde extrémité (23), la surface oblique (35, 36) de la seconde glissière (30) étant inclinée vers la surface de fond (27) de la gouttière (21) et vers la première extrémité (22) ;
- un premier taquet (19) comportant une surface d'appui (41) pour appuyer sur le câble (11) placé entre la surface d'appui (41) et la surface de fond (27) de la gouttière (21) et comportant, sur un côté opposé à la surface d'appui (41), une surface de glissement (42, 43) pour glisser sur la surface oblique (33, 34) de la première glissière (29) ;
- un second taquet (20) comportant une surface d'appui (44) pour appuyer sur le câble (11) placé entre cette surface d'appui (44) et la surface de fond (27) de la gouttière (21) et comportant, sur un côté opposé à sa surface d'appui (44), une surface de glissement (45, 46) pour glisser sur la surface oblique (35, 36) de la seconde glissière (30) ;
- des organes de non-retour (37, 38, 59) entre le corps (18) et le premier taquet (19), pour permettre au premier taquet (19) de se déplacer vers la seconde extrémité (23) et pour interdire au premier taquet (19) de se déplacer vers la première extrémité (22) ; et
- des organes de non-retour (39, 40, 60) entre le corps (18) et le second taquet (20), pour permettre au second taquet (20) de se déplacer vers la première extrémité (22) et pour interdire au second taquet (20) de se déplacer vers la seconde extrémité (23) ;
dispositif **caractérisé en ce qu'**il comporte en outre une anse (17) dont une première extrémité est reliée au premier taquet (19) et dont une seconde extrémité est reliée au second taquet (20), laquelle anse (17) est flexible pour permettre à sa première extrémité et à sa seconde extrémité de s'éloigner ou de se rapprocher l'une de l'autre.

2. Dispositif selon la revendication 1, **caractérisé en ce que** lesdits organes de non-retour entre le corps (18) et le premier taquet (19) comportent une denture (65) sur une surface (37, 38) du corps (18) et un cran (59) sur la première extrémité de l'anse (17) ; et lesdits organes de non-retour entre le corps (18) et le second taquet (20) comportent une denture (65) sur une surface (39, 40) du corps (18) et un cran (60) sur la seconde extrémité de l'anse (17).

3. Dispositif selon la revendication 2, **caractérisé en ce que** :
- l'anse (17) comporte un premier bras (57) qui comporte ladite première extrémité et un second bras (58) qui comporte ladite seconde extrémité ;
- le cran (59) sur la première extrémité de l'anse (17) comporte une face inclinée située du côté du second bras (58) et une face droite située du côté opposé à celui où se trouve le second bras (58), et la denture (65) de la surface (37, 38) présente des faces inclinées tournées vers la première extrémité (22) et des faces droites tournées vers la seconde extrémité (23) ; et le corps (18) et le premier taquet (19) sont configurés pour que quand la surface de glissement (42, 43) du premier taquet (19) glisse sur la surface oblique (33, 34) de la première glissière (29), le glissement des faces inclinées du cran (59) sur les faces inclinées de la denture (65) de la surface (37, 38) permette au premier taquet (19) de se déplacer vers la seconde extrémité (23), alors que les faces droites du cran (59) et de la denture (65) interdisent au premier taquet (19) de se déplacer vers la première extrémité (22) ;
- le cran (60) sur la seconde extrémité de l'anse (17) comporte une face inclinée située du côté du premier bras (57) et une face droite située du côté opposé à celui où se trouve le premier bras (57), et la denture (65) de la surface (39, 40) présente des faces inclinées tournées vers la seconde extrémité (23) et des faces droites tournées vers la première extrémité (22) ; et le corps (18) et le second taquet (20) sont configurés pour que quand la surface de glissement (45, 46) du second taquet (20) glisse sur la surface oblique (35, 36) de la seconde glissière (30), le glissement des faces inclinées du cran (60) sur les faces inclinées de la denture (65) de la surface (39, 40) permette au second taquet (20) de se déplacer vers la première extrémité (22), alors que les faces droites du cran (60) et de la denture (65) interdisent au second taquet (20) de se déplacer vers la seconde extrémité (23).

4. Dispositif selon l'une quelconque des revendications 1 à 3, **caractérisé en ce que** le premier taquet (19) et le second taquet (20) comportent chacun une semelle (47, 49) dont fait partie ladite surface d'appui (41, 44) et une platine (48, 50) dont fait partie ladite surface de glissement (42, 43, 45, 46), la semelle (47, 49) et la platine (48, 50) étant disposées en V avec, sur la semelle (47, 49), la surface qui regarde la platine (48, 50) qui est sur un côté opposé à la surface d'appui (41, 44) et avec, sur la platine (48, 50), la surface qui regarde la semelle (47, 49) qui est sur un côté opposé aux surfaces de glissement (42, 43, 45, 46).

5. Dispositif selon la revendication 4, **caractérisé en ce que** la platine (48, 50) du premier taquet (19) et du second taquet (20) présente une portion qui s'étend au-delà de la semelle (47, 49) ; et la platine (48, 50) est reliée, à son extrémité opposée à celle par laquelle elle est reliée à la semelle (47, 49), à une patte (61, 62) formée par une paroi s'étendant transversalement à la platine (48, 50), du côté de la semelle (47, 49).

6. Dispositif selon l'une quelconque des revendications 1 à 5, **caractérisé en ce que** :
- la première glissière (29) comporte deux dites surfaces obliques, respectivement une première surface oblique (33) et une seconde surface oblique (34), le premier taquet (19) comporte deux dites surfaces de glissement, respectivement une première surface de glissement (42) pour glisser sur la première surface oblique (33) de la première glissière (29) et une seconde surface de glissement (43) pour glisser sur la seconde surface oblique (34) de la première glissière (29), le corps (18) comporte un espace (28) entre la première surface oblique (33) et la seconde surface oblique (34) de la première glissière (29) pour que la première extrémité de l'anse (17) puisse se déplacer avec le premier taquet (19) ; et
- la seconde glissière (30) comporte deux dites surfaces obliques, respectivement une première surface oblique (35) et une seconde surface oblique (36), le second taquet (20) comporte deux dites surfaces de glissement, respectivement une première surface de glissement (45) pour glisser sur la première surface oblique (35) de la seconde glissière (30) et une seconde surface de glissement (46) pour glisser sur la seconde surface oblique (36) de la seconde glissière (30), le corps (18) comporte un espace (28) entre la première surface oblique (35) et la seconde surface oblique (36) de la seconde glissière (30) pour que la seconde extrémité de l'anse (17) puisse se déplacer avec le second taquet (20).

7. Dispositif selon la revendication 6, **caractérisé en ce que** la première surface oblique (33) et la seconde surface oblique (34) de la première glissière (29) sont chacune inclinées vers la surface de fond (27) de la gouttière (21) et vers l'espace (28) situé entre elles ; et la première surface oblique (35) et la seconde surface oblique (36) de la seconde glissière (30) sont chacune inclinées vers la surface de fond (27) de la gouttière (21) et vers l'espace (28) situé entre elles.

8. Dispositif selon l'une quelconque des revendications 6 ou 7, **caractérisé en ce que** l'espace (28) du corps (18) situé entre la première surface oblique (33) et la seconde surface oblique (34) de la première glissière (29), et l'espace (28) du corps (18) situé entre la première surface oblique (35) et la seconde surface oblique (36) de la seconde glissière (30) font partie d'un même espace du corps (18) s'étendant de la première extrémité (22) à la seconde extrémité (23) de la gouttière (21).

9. Dispositif selon l'une quelconque des revendications 1 à 8, **caractérisé en ce que** la surface de fond (27) de la gouttière (21) présente des godrons (56).

10. Dispositif selon l'une quelconque des revendications 1 à 9, **caractérisé en ce que** la surface d'appui (41) du premier taquet (19) et la surface d'appui (44) du second taquet (20) présentent des encoches (53).

11. Dispositif selon l'une quelconque des revendications 1 à 10, **caractérisé en ce que** l'anse (17) comporte un premier bras (57) qui comporte ladite première extrémité et un second bras (58) qui comporte ladite seconde extrémité ; et le dispositif comporte deux fentes (63) ménagées respectivement dans le premier bras (57) et dans le second bras (58), chacune configurée pour le passage d'un feuillard (8).

12. Dispositif selon l'une quelconque des revendications 1 à 11, **caractérisé en ce que** ledit corps (18) comporte une oreille (64) saillant d'un rebord (31, 32) du côté qui est opposé à la gouttière (21), ladite oreille étant munie d'un orifice central pour le passage de la tige d'une vis (9).

## Patentansprüche

1. Aufhängevorrichtung zum Aufhängen eines Kabels (11) mit vorbestimmtem Durchmesser an einer Halterung (12), umfassend:
- einen Körper (18) mit einer Rinne (21), die sich zwischen einem ersten Ende (22) und einem zweiten Ende (23) erstreckt und dafür ausgelegt ist, das Kabel (11) aufzunehmen, welches sich in Bezug auf die Rinne (21) zu deren erstem Ende (22) oder zu deren zweitem Ende (23) hin ziehen lässt; und mit einer ersten Gleitschiene (29) und einer zweiten Gleitschiene (30) mit jeweils einer Schrägfläche (33 - 36), die einer Grundfläche (27) der Rinne (21) zugewandt ist, wobei die Schrägfläche (33, 34) der ersten Gleitschiene (29) zu der Grundfläche (27) der Rinne (21) hin und zu dem zweiten Ende (23) hin geneigt ist, wobei die Schrägfläche (35, 36) der zweiten Gleitschiene (30) zu der Grundfläche (27) der Rinne (21) hin und zu dem ersten Ende (22) hin geneigt ist;
- eine erste Klemmnase (19) mit einer ersten Andrückfläche (41), um auf das Kabel (11) zu drücken, das sich zwischen der Andrückfläche (41) und der Grundfläche (27) der Rinne (21) befindet, und, auf einer der Andrückfläche (41) entgegengesetzten Seite, mit einer Gleitfläche (42, 43), um auf der Schrägfläche (33, 34) der ersten Gleitschiene (29) zu gleiten;
- eine zweite Klemmnase (20) mit einer Andrückfläche (44), um auf das Kabel (11) zu drücken, das sich zwischen der Andrückfläche (44) und der Grundfläche (27) der Rinne (21) befindet, und, auf einer ihrer Andrückfläche (44) entgegengesetzten Seite, mit einer Gleitfläche (45, 46), um auf der Schrägfläche (35, 36) der zweiten Gleitschiene (30) zu gleiten;
- Rücklaufsperren (37, 38, 59) zwischen dem Körper (18) und der ersten Klemmnase (19), um ein Bewegen der ersten Klemmnase (19) zu dem zweiten Ende (23) hin zu erlauben und ein Bewegen der ersten Klemmnase (19) zu dem ersten Ende (22) hin zu verhindern; und
- Rücklaufsperren (39, 40, 60) zwischen dem Körper (18) und der zweiten Klemmnase (20), um ein Bewegen der zweiten Klemmnase (20) zu dem ersten Ende (22) hin zu erlauben und ein Bewegen der zweiten Klemmnase (20) zu dem zweiten Ende (23) hin zu verhindern; wobei die Vorrichtung **dadurch gekennzeichnet ist, dass** sie weiterhin einen Hängebügel (17) umfasst, von welchem ein erstes Ende mit der ersten Klemmnase (19) verbunden ist und ein zweites Ende mit der zweiten Klemmnase (20) verbunden ist, wobei der Hängebügel (17) flexibel ist, damit sich dessen erstes Ende und dessen zweites Ende voneinander wegbewegen oder aufeinander zubewegen können.

2. Vorrichtung nach Anspruch 1, **dadurch gekennzeichnet, dass** die Rücklaufsperren zwischen dem Körper (18) und der ersten Klemmnase (19) eine Zahnanordnung (65) auf einer Oberfläche (37, 38) des Körpers (18) und eine Raste (59) an dem ersten Ende des Hängebügels (17) aufweisen; und dass die Rücklaufsperren zwischen dem Körper (18) und der zweiten Klemmnase (20) eine Zahnanordnung (65) auf einer Oberfläche (39, 40) des Körpers (18) und eine Raste (60) an dem zweiten Ende des Hängebügels (17) umfassen.

3. Vorrichtung nach Anspruch 2 **dadurch gekennzeichnet, dass**:
- der Hängebügel (17) einen ersten Arm (57) mit dem ersten Ende und einen zweiten Arm (58) mit dem zweiten Ende umfasst;
- die Raste (59) an dem ersten Ende des Hängebügels (17) auf der zu dem zweiten Arm (58) weisenden Seite eine geneigte Fläche und auf der Seite, die jener, auf der sich der zweite Arm (58) befindet, entgegengesetzt ist, eine gerade Fläche umfasst, und dass die Zahnanordnung (65) der Oberfläche (37, 38) geneigte Flächen aufweist, die dem ersten Ende (22) zugewandt sind, und gerade Flächen, die dem zweiten Ende (23) zugewandt sind; und dass der Körper (18) und die erste Klemmnase (19) dafür ausgelegt sind, dass, wenn die Gleitfläche (42, 43) der ersten Klemmnase (19) auf der Schrägfläche (33, 34) der ersten Gleitschiene (29) gleitet, das Gleiten der geneigten Flächen der Raste (59) auf den geneigten Flächen der Zahnanordnung (65) der Oberfläche (37, 38) ein Bewegen der ersten Klemmnase (19) zu dem zweiten Ende (23) hin erlaubt, wogegen die geraden Flächen der Raste (59) und der Zahnanordnung (65) ein Bewegen der ersten Klemmnase (19) zu dem ersten Ende (22) hin verhindern;
- die Raste (60) an dem zweiten Ende des Hängebügels (17) auf der zu dem ersten Arm (57) weisenden Seite eine geneigte Fläche und auf der Seite, die jener, auf der sich der erste Arm (57) befindet, entgegengesetzt ist, eine gerade Fläche umfasst, und dass die Zahnanordnung (65) der Oberfläche (39, 40) geneigte Flächen aufweist, die dem zweiten Ende (23) zugewandt sind, und gerade Flächen, die dem ersten Ende (22) zugewandt sind; und dass der Körper (18) und die zweite Klemmnase (20) so ausgestaltet sind, dass, wenn die Gleitfläche (45, 46) der zweiten Klemmnase (20) auf der Schrägfläche (35, 36) der zweiten Gleitschiene (30) gleitet, das Gleiten der geneigten Flächen der Raste (60) auf den geneigten Flächen der Oberfläche (39, 40) ein Bewegen der zweiten Klemmnase (20) zu dem ersten Ende (22) hin erlaubt, wogegen die geraden Flächen der Raste (60) und der Zahnanordnung (65) ein Bewegen der zweiten Klemmnase (20) zu dem zweiten Ende (23) hin verhindern.

4. Vorrichtung nach einem der Ansprüche 1 bis 3, **dadurch gekennzeichnet, dass** die erste Klemmnase (19) und die zweite Klemmnase (20) jeweils eine Sohle (47, 49), zu der auch die Andrückfläche (41, 44) gehört, und eine Platine (48, 50), zu der auch die Gleitfläche (42, 43, 45, 46) gehört, umfassen, wobei die Sohle (47, 49) und die Platine (48, 50) V-förmig angeordnet sind, wobei auf der Sohle (47, 49) die der Platine (48, 50) zugewandte Oberfläche auf einer der Andrückfläche (41, 44) entgegengesetzten Seite gelegen ist, und wobei auf der Platine (48, 50) die der Sohle (47, 49) zugewandte Seite auf einer den Gleitflächen (42, 43, 45, 46) entgegengesetzten Seite gelegen ist.

5. Vorrichtung nach Anspruch 4, **dadurch gekennzeichnet, dass** die Platine (48, 50) der ersten Klemmnase (19) und der zweiten Klemmnase (20) jeweils einen Abschnitt aufweist, der sich über die Sohle (47, 49) hinaus erstreckt; und dass die Platine (48, 50), an deren Ende, das jenem entgegengesetzt ist, durch welches sie mit der Sohle (47, 49) verbunden ist, mit einer Lasche (61, 62) verbunden ist, die durch eine Wand gebildet ist, die sich sohlenseitig (47, 49) quer zu der Platine (48, 50) erstreckt.

6. Vorrichtung nach einem der Ansprüche 1 bis 5, **dadurch gekennzeichnet, dass**:
- die erste Gleitschiene (29) zwei sogenannte Schrägflächen, und zwar eine erste Schrägfläche (33) und eine zweite Schrägfläche (34), umfasst, dass die erste Klemmnase (19) zwei sogenannte Gleitflächen, und zwar eine erste Gleitfläche (42) zum Gleiten auf der ersten Schrägfläche (33) der ersten Gleitschiene (29) und eine zweite Gleitfläche (43) zum Gleiten auf der zweiten Schrägfläche (34) der ersten Gleitschiene (29), umfasst, dass der Körper (18) einen Zwischenraum (28) zwischen der ersten Schrägfläche (33) und der zweiten Schrägfläche (34) der ersten Gleitschiene (29) umfasst, damit sich das erste Ende des Hängebügels (17) gemeinsam mit der ersten Klemmnase (19) bewegen kann;und
- die zweite Gleitschiene (30) zwei sogenannte Schrägflächen, und zwar eine erste Schrägfläche (35) und eine zweite Schrägfläche (36), umfasst, dass die zweite Klemmnase (20) zwei sogenannte Gleitflächen, und zwar eine erste Gleitfläche (45) zum Gleiten auf der ersten Schrägfläche (35) der zweiten Gleitschiene (30) und eine zweite Gleitfläche (46) zum Gleiten auf der zweiten Schrägfläche (36) der zweiten Gleitschiene (30), umfasst, dass der Körper (18) einen Zwischenraum (28) zwischen der ersten Schrägfläche (35) und der zweiten Schrägfläche (36) der zweiten Gleitschiene (30) umfasst, damit sich das zweite Ende des Hängebügels (17) gemeinsam mit der zweiten Klemmnase (20) bewegen kann.

7. Vorrichtung nach Anspruch 6, **dadurch gekennzeichnet, dass** die erste Schrägfläche (33) und die zweite Schrägfläche (34) der ersten Gleitschiene (29) jeweils zu der Grundfläche (27) der Rinne (21) hin und zu dem zwischen ihnen gelegenen Zwischenraum (28) hin geneigt sind; und dass die erste Schrägfläche (35) und die zweite Schrägfläche (36) der zweiten Gleitschiene (30) jeweils zu der Grundfläche (27) der Rinne (21) hin und zu dem zwischen ihnen gelegenen Zwischenraum (28) hin geneigt sind.

8. Vorrichtung nach einem der Ansprüche 6 oder 7, **dadurch gekennzeichnet, dass** der Zwischenraum (28) des Körpers (18), der zwischen der ersten Schrägfläche (33) und der zweiten Schrägfläche (34) der ersten Gleitschiene (29) gelegen ist, und der Zwischenraum (28) des Körpers (18), der zwischen der ersten Schrägfläche (35) und der zweiten Schrägfläche (36) der zweiten Gleitschiene (30) gelegen ist, Teil ein und desselben Raums des Körpers (18) sind, welcher sich von dem ersten Ende (22) bis zu dem zweiten Ende (23) der Rinne (21) erstreckt.

9. Vorrichtung nach einem der Ansprüche 1 bis 8, **dadurch gekennzeichnet, dass** die Grundfläche (27) der Rinne (21) Godronierungen (56) aufweist.

10. Vorrichtung nach einem der Ansprüche 1 bis 9, **dadurch gekennzeichnet, dass** die Andrückfläche (41) der ersten Klemmnase (19) und die Andrückfläche (44) der zweiten Klemmnase (20) Einkerbungen (53) aufweisen.

11. Vorrichtung nach einem der Ansprüche 1 bis 10, **dadurch gekennzeichnet, dass** der Hängebügel (17) einen ersten Arm (57) mit dem ersten Ende und einen zweiten Arm (58) mit dem zweiten Ende umfasst; und dass die Vorrichtung zwei Schlitze (63) jeweils in dem ersten Arm (57) und in dem zweiten Arm (58) umfasst, wobei jeder Schlitz für die Durchführung eines Bandes (8) ausgelegt ist.

12. Vorrichtung nach einem der Ansprüche 1 bis 11, **dadurch gekennzeichnet, dass** der Körper (18) eine Hängeöse (64) umfasst, welche aus einem Rand (31, 32) auf der der Rinne (21) entgegensetzten Seite hervorsteht, wobei die Hängeöse eine mittige Öffnung zur Durchführung des Schafts einer Schraube (9) aufweist.

## Claims

1. Suspension device for suspending a cable (11) of predetermined diameter from a support (12), comprising:
- a body (18) comprising a channel (21) extending between a first end (22) and a second end (23), configured to receive the cable (11), which is able to be driven vis-à-vis the channel (21) towards the first end (22) or towards the second end (23); and comprising a first runner (29) and a second runner (30) each comprising an oblique surface (33-36) facing a bottom surface (27) of the channel (21), the oblique surface (33, 34) of the first runner (29) being inclined towards the bottom surface (27) of the channel (21) and towards the second end (23), the oblique surface (35, 36) of the second runner (30) being inclined towards the bottom surface (27) of the channel (21) and towards the first end (22);
- a first catch (19) comprising a bearing surface (41) for bearing on the cable (11) placed between the bearing surface (41) and the bottom surface (27) of the channel (21) and comprising, on a side opposite to the bearing surface (41), a sliding surface (42, 43) for sliding on the oblique surface (33, 34) of the first runner (29);
- a second catch (20) comprising a bearing surface (44) for bearing on the cable (11) placed between this bearing surface (44) and the bottom surface (27) of the channel (21) and comprising, on a side opposite to its bearing surface (44), a sliding surface (45, 46) for sliding on the oblique surface (35, 36) of the second runner (30);
- non-return members (37, 38, 59) between the body (18) and the first catch (19), to enable the first catch (19) to move towards the second end (23) and to prevent the first catch (19) from moving towards the first end (22); and
- non-return members (39, 40, 60) between the body (18) and the second catch (20), to enable the second catch (20) to move towards the first end (22) and to prevent the second catch (20) from moving towards the second end (23);
said device being **characterised in that** it further comprises a handle (17), a first end of which is connected to the first catch (19) and a second end of which is connected to the second catch (20), said handle (17) being flexible to enable its first end and its second end to move away from or towards each other.

2. Device according to claim 1, **characterised in that** said non-return members between the body (18) and the first catch (19) comprise a set of teeth (65) on a surface (37, 38) of the body (18) and a notch (59) on the first end of the handle (17); and said non-return members between the body (18) and the second catch (20) comprise a set of teeth (65) on a surface (39, 40) of the body (18) and a notch (60) on the second end of the handle (17).

3. Device according to claim 2, **characterised in that**:
- the handle (17) comprises a first arm (57) that comprises said first end and a second arm (58) that comprises said second end;
- the notch (59) on the first end of the handle (17) comprises an inclined face situated on the same side as the second arm (58) and a straight face situated on the side opposite the one where the second arm (58) is situated, and the set of teeth (65) on the surface (37, 38) has inclined faces turned towards the first end (22) and straight faces turned towards the second end (23); and the body (18) and the first catch (19) are configured so that, when the sliding surface (42, 43) of the first catch (19) slides on the oblique surface (33, 34) of the first runner (29), the sliding of the inclined faces of the notch (59) on the inclined faces of the set of teeth (65) on the surface (37, 38) enables the first catch (19) to move towards the second end (23), whereas the straight faces of the notch (59) and of the set of teeth (65) prevent the first catch (19) from moving towards the first end (22);
- the notch (60) on the second end of the handle (17) comprises an inclined face situated on the same side as the first arm (57) and a straight face situated on the side opposite the one where the first arm (57) is situated, and the set of teeth (65) on the surface (39, 40) has inclined faces turned towards the second end (23) and straight faces turned towards the first end (22); and the body (18) and the second catch (20) are configured so that, when the sliding surface (45, 46) of the second catch (20) slides on the oblique surface (35, 36) of the second runner (30), the sliding of the inclined faces of the notch (60) on the inclined faces of the set of teeth (65) on the surface (39, 40) enables the second catch (20) to move towards the first end (22), whereas the straight faces of the notch (60) and of the set of teeth (65) prevent the second catch (20) from moving towards the second end (23).

4. Device according to any of claims 1 to 3, **characterised in that** the first catch (19) and the second catch (20) each comprise a base (47, 49), of which said bearing surface (41, 44) forms part, and a plate (48, 50), of which said sliding surface (42, 43, 45, 46) forms part, the base (47, 49) and the plate (48, 50) being disposed in a V with, on the base (47, 49), the surface that faces the plate (48, 50) being on a side opposite to the bearing surface (41, 44), and with, on the plate (48, 50), the surface facing the base (47, 49) being on a side opposite to the sliding surfaces (42, 43, 45, 46).

5. Device according to claim 4, **characterised in that** the plate (48, 50) of the first catch (19) and of the second catch (20) has a portion that extends beyond the base (47, 49); and the plate (48, 50) is connected, at its opposite end to the one by which it is connected to the base (47, 49), to a lug (61, 62) formed by a wall extending transversely to the plate (48, 50), on the same side as the base (47, 49).

6. Device according to any of claims 1 to 5, **characterised in that**:
- the first runner (29) comprises two said oblique surfaces, respectively a first oblique surface (33) and a second oblique surface (34), the first catch (19) comprises two said sliding surfaces, respectively a first sliding surface (42) for sliding on the first oblique surface (33) of the first runner (29) and a second sliding surface (43) for sliding on the second oblique surface (34) of the first runner (29), the body (18) comprises a space (28) between the first oblique surface (33) and the second oblique surface (34) of the first runner (29) so that the first end of the handle (17) can move with the first catch (19); and
- the second runner (30) comprises two said oblique surfaces, respectively a first oblique surface (35) and a second oblique surface (36), the second catch (20) comprises two said sliding surfaces, respectively a first sliding surface (45) for sliding on the first oblique surface (35) of the second runner (30) and a second sliding surface (46) for sliding on the second oblique surface (36) of the second runner (30), the body (18) comprises a space (28) between the first oblique surface (35) and the second oblique surface (36) of the second runner (30) so that the second end of the handle (17) can move with the second catch (20).

7. Device according to claim 6, **characterised in that** the first oblique surface (33) and the second oblique surface (34) of the first runner (29) are each inclined towards the bottom surface (27) of the channel (21) and towards the space (28) situated between them; and the first oblique surface (35) and the second oblique surface (36) of the second runner (30) are each inclined towards the bottom surface (27) of the channel (21) and towards the space (28) situated between them.

8. Device according to either claim 6 or claim 7, **characterised in that** the space (28) of the body (18) situated between the first oblique surface (33) and the second oblique surface (34) of the first runner (29), and the space (28) of the body (18) situated between the first oblique surface (35) and the second oblique surface (36) of the second runner (30) form part of the same space of the body (18) extending from the first end (22) to the second end (23) of the channel (21).

9. Device according to any of claims 1 to 8, **characterised in that** the bottom surface (27) of the channel (21) has gadroons (56).

10. Device according to any of claims 1 to 9, **characterised in that** the bearing surface (41) of the first catch (19) and the bearing surface (44) of the second catch (20) have notches (53).

11. Device according to any of claims 1 to 10, **characterised in that** the handle (17) comprises a first arm (57) that comprises said first end and a second arm (58) that comprises said second end; and the device comprises two slots (63) provided respectively in the first arm (57) and in the second arm (58), each configured for a strip (8) to pass.

12. Device according to any of claims 1 to 11, **characterised in that** said body (18) comprises a bracket (64) projecting from an edge (31, 32) on the side that is opposite to the channel (21), said bracket being provided with a central orifice for the shank of a screw (9) to pass.
